# EUROPEAN PATENT APPLICATION

(11) **EP 4 822 328 A1**
(43) Date of publication of application: **14.10.2026**
(21) Application number: 25169219.0
(22) Date of filing: 08.04.2025
(51) Int. Cl.: G01N 1/10, B01L 3/00

(54) **FLUID TRANSFER DEVICE**

(71) Applicant: Sartorius Stedim FMT, 13400 Aubagne (FR)
(72) Inventor: GRIMM, Christian, 37079 Göttingen (DE); SCHOLZ, Jochen, 37079 Göttingen (DE)
(74) Representative: Plasseraud IP

(57) **Abstract**

The invention relates to a sampling probe (81) comprising a hollow shaft (811) with a proximal end (812) and a distal end (813); wherein the shaft comprises a filtration section for filtered intake of sample. The invention also relates to a fluid transfer device (11) comprising: a body (83, 151) with: an elongate passage extending through the body and having a proximal end and a distal end; a septum (59) sealing the passage at a first location, the septum being self-sealing; a diaphragm (29, 43) sealing the passage at a second location intermediate the septum and the distal end of the passage; and the longitudinally displaceable sampling probe (81), disposed in and extending along the passage, the sampling probe extending through and being secured to the diaphragm and being displaceable between a stand-by position and a intake position. The septum may be replaced by a plug attached to the proximal opened end of the shaft and sealing the passage at a first location.

## Description

### TECHNICAL FIELD

This disclosure relates generally to fluid transfer devices and more specifically to a fluid transfer device for transferring fluid in a substantially aseptic manner.

### BACKGROUND

In the manufacturing and processing of many different products, it is often necessary to transfer fluid into or out of a closed processing system and do so in a substantially aseptic, hygienic, or sterile manner. In particular, the need to transfer fluid often arises in the manufacturing and processing of pharmaceuticals, biopharmaceuticals, or other biotechnology applications where processes are conducted in large process tanks, including but not limited to, the transfer of media solutions. The need for fluid transfer arises in other applications and industries as well, including but not limited to, the production of food, cosmetics, paint, chemicals, including hazardous chemicals, and the transfer and handling of semiconductor fluids. During transfers or sampling, fluid in tanks or other vessels must remain substantially free of contaminants. In addition, when making such transfers, it is desirable to keep the environment surrounding a vessel free from contamination by the contents of the vessel or a sample taken therefrom. It is often the case that throughout the manufacturing process there is a need to take multiple samples from the fluid or, in some circumstances, add additional fluid or media to the fluid in a vessel. To accomplish a substantially aseptic, hygienic, or sterile transfer, it is desirable to control the environment through which the fluid flows, for example, the pathway from a tank to a sample container should be substantially aseptic, hygienic, or sterile along the entire pathway. Furthermore, it is desirable that the fluid transfer device be safe for use, reliable, and of low-cost construction.

It is also desirable to transfer fluid using a device which is pre-sterilized and disposable. A pre-sterilized device avoids the need for an operator to prepare the device for use. In addition, a disposable device avoids the time consuming and laborious task of sterilizing sampling equipment.

In view of the above, there exists a need for a fluid transfer device that is pre-sterilized and disposable and capable of use in common industrial settings, such as those found in the pharmaceutical, biopharmaceutical, or other high purity industries.

### SUMMARY

Briefly described, a fluid transfer device is disclosed for transferring fluid to or from a fluid receptacle, such as a tank, in a substantially aseptic manner. As used herein, the term "aseptic" includes aseptic, hygienic, or sterile conditions. The device comprises a body with an elongate passage extending through the body. The body has a proximal end and a distal end. The proximal end is that end closest to the vessel from which fluid is transferred. The distal end is that end furthest away from the vessel from which fluid is transferred. A longitudinally displaceable cannula is disposed in and extends along the passage in the body/hollow body. A septum sealing the passage is at a first location; the septum being pierceable and self-sealing. A diaphragm sealing the passage is at a second location intermediate the septum and the distal end of the passage. The cannula extends through and is secured to the diaphragm and has a sharpened end disposed adjacent to or in the septum. Longitudinal displacement of the cannula towards the septum causes its sharpened end to pierce and project through the septum, with the diaphragm stretching to accommodate the displacement of the cannula while maintaining its seal about the cannula and thus maintaining the seal of the passage.

In a preferred embodiment, the passage between the septum and diaphragm is substantially aseptic. In another preferred embodiment, the entire pathway that fluid flows from the fluid vessel to a sample container is also substantially aseptic.

In yet another embodiment, the device also comprises a tank mount. In this embodiment, the tank mount is attached to the fluid transfer device. In other embodiments, the tank mount is substantially aseptic to meet the needs of the end user. In another embodiment, the tank mount contains an opening through which the cannula passes when the cannula is longitudinally displaced. In another embodiment, a groove is located in the tank mount and a seal is located in the groove that allows the formation of a seal between a tank mount and a tank. In yet another embodiment, the tank mount further comprises a threaded stud for mounting the fluid transfer device to a tank.

In another embodiment, the proximal end of the cannula is disposed in the septum prior to displacement. In another embodiment, the septum is constructed of a silicone elastomer. In yet another embodiment, the diaphragm is constructed of a silicone elastomer. In another embodiment, the diaphragm is constructed of a solvent resistant elastomer. In another embodiment, the septum is constructed of a solvent resistant elastomer. In another embodiment, the septum is constructed of a perfluoropolyether elastomer. In another embodiment, the diaphragm is constructed of a perfluoropolyether elastomer.

In yet another embodiment, the fluid transfer device comprises a tab assembly to which the cannula is connected. In this embodiment, the tab assembly controls the displacement of the cannula through the passage. In another embodiment, the tab assembly further comprises a tab guide. In this embodiment, longitudinal displacement of the tab assembly displaces the tab guide through a portion of the passage. In another embodiment, the cannula is axially biased longitudinally to maintain the proximal end of the cannula disposed adjacent to or within the septum. In this embodiment, the bias retracts the cannula to substantially its original position or retracted non-actuated position or stand-by position after displacement. In another embodiment, the cannula is axially biased by a spring.

In another embodiment, the device comprises a retaining cap at the distal end of the body. In yet another embodiment, the device comprises a retaining cap comprising an opening through which the cannula and tab guide pass. In another embodiment, the retaining cap engages the distal end of the body and further comprises restraining means to allow the tab guide and the cannula to move through the retaining cap and stop at a predetermined position. In yet another embodiment, the restraining means comprises an axial channel extending along the tab guide and a detent extending from the opening in the retaining cap. In this embodiment, the detent extends from the opening in the retaining cap into the axial channel along the tab guide. The detent limits the longitudinal displacement of the tab guide in the distal direction and thus keeps the tab guide and entire tab assembly from coming out of the retaining cap.

In another embodiment, the body of the device comprises a substantially cylindrical outer portion, at least one alignment aperture, and seats for the diaphragm and septum. In yet another embodiment, a single fluid transfer device is joined together with additional fluid transfer devices as described herein to form a cartridge having a plurality of bodies.

In yet another embodiment, the device further comprises a safety retention band preventing the cannula from longitudinal displacement until removal of the safety retention band. In another embodiment, the distal end of the cannula is barbed. In yet another embodiment, the distal end of the cannula is fitted with a luer.

Also provided is a fluid transfer device comprising a plurality of bodies as described herein joined together to form a cartridge. In a preferred embodiment, nine fluid transfer devices are joined to form a single cartridge. Each fluid transfer device may comprise a body comprising an elongate passage extending through the body and having a proximal end and a distal end; a longitudinally displaceable cannula disposed in and extending along the passage; a septum sealing the passage at a first location, the septum being pierceable and self-sealing; a diaphragm sealing the passage at a second location intermediate the septum and the distal end of the passage; the cannula extending through and being secured to the diaphragm and having a sharpened end disposed adjacent the septum; and wherein longitudinal displacement of the cannula towards the septum causes its sharpened end to pierce and project through the septum, the diaphragm stretching to accommodate the displacement of the cannula while maintaining a seal about the cannula and thus maintaining the seal of the passage.

Also provided is a kit for transferring fluid comprising a fluid transfer device as described herein. The fluid transfer device may comprise one or more bodies joined together, each body comprising an elongated passage extending through the body and having a proximal end and a distal end; a longitudinally displaceable cannula disposed in and extending along the passage; a septum sealing the passage at a first location, the septum being pierceable and self-sealing; a diaphragm sealing the passage at a second location intermediate the septum and the distal end of the passage; the cannula extending through and being secured to the diaphragm and having a sharpened end disposed adjacent the septum; wherein longitudinal displacement of the cannula causing its sharpened end to pierce and project through the septum, the diaphragm stretching to accommodate the displacement of the cannula while maintaining its seal about the cannula and thus maintaining the seal of the passage. The kit may also contain a tank mount, one or more lengths of flexible tubing, and a plurality of sample containers. In a preferred embodiment the kit is rendered substantially aseptic and packaged to maintain a substantially aseptic state before use.

The invention will be better understood and appreciated upon review of the detailed description set forth below when taken in conjunction with the accompanying drawing figures, described briefly below. According to common practice, the various features of the drawings may not be drawn to scale. Dimensions and relative sizes of various features and elements in the drawings may be shown enlarged or reduced to illustrate more clearly the embodiments of the invention.

### BRIEF DESCRIPTION OF THE DRAWINGS

Fig. 1 is a cross-section of a fluid transfer device wherein the fluid transfer device is not actuated.
Fig. 2 is a perspective view of one embodiment of a fluid transfer device with flexible tubing and sample containers.
Fig. 3 is a perspective view of one embodiment of a fluid transfer device with a single flexible tube and sample container.
Fig. 4 depicts one embodiment of a sample container, flexible tubing, and individual elements of each.
Fig. 5 is a perspective view of an embodiment of a sample container.
Fig. 6 is a perspective view of an embodiment of a crimped collar.
Fig. 7 is a side view of an embodiment of a crimped collar.
Fig. 8 is a perspective view of an embodiment of a bag insert.
Fig. 9 is a perspective view of an embodiment of an unstretched diaphragm.
Fig. 10 is another perspective view of an embodiment of an unstretched diaphragm.
Fig. 11 is a top view of an embodiment of an unstretched diaphragm.
Fig. 12 is a bottom view of an embodiment of an unstretched diaphragm.
Fig. 13 is a perspective view of an embodiment of a stretched diaphragm.
Fig. 14 is a side view of an embodiment of a stretched diaphragm.
Fig. 15 is a top view of an embodiment of a stretched diaphragm.
Fig. 16 is a bottom view of an embodiment of a stretched diaphragm.
Fig. 17 is a perspective view of an embodiment of a septum.
Fig. 18 is a side view of an embodiment of a septum depicting the contours of the central cavity and rounded shoulder.
Fig. 19 is a side view of an embodiment of a septum.
Fig. 20 is a top view of an embodiment of a septum.
Fig. 21 is a perspective view of an embodiment of a bolt.
Fig. 22 is a bottom view of an embodiment of a bolt.
Fig. 23 is a top view of an embodiment of a bolt.
Fig. 24 is an embodiment of a compressed spring.
Fig. 25 is an embodiment of a cannula.
Fig. 26A - 26D show embodiments of a sampling probe.
Fig. 27 is a perspective view of an embodiment of the lower portion of a body.
Fig. 28 is a top view of an embodiment of the lower portion of a body.
Fig. 29 is a side view of an embodiment of the lower portion of a body.
Fig. 30 is another side view of an embodiment of a holder showing an alignment key.
Fig. 31 is a bottom view of an embodiment of a holder.
Fig. 32 is a perspective view of an embodiment of a tab assembly with a cannula and diaphragm.
Fig. 33 is a top view of an embodiment of a tab assembly.
Fig. 34 is a bottom view of an embodiment of a tab assembly with a cannula and diaphragm.
Fig. 35 is a perspective view of an embodiment of a tab and tab guide.
Fig. 36 is a side view of an embodiment of a tab and tab guide.
Fig. 37 is a rear view of an embodiment of a tab and tab guide.
Fig. 38 is a front view of an embodiment of a tab and tab guide.
Fig. 39 is a bottom view of an embodiment of a tab and tab guide.
Fig. 40 is a perspective view of an embodiment of a tank mount showing an alignment channel.
Fig. 41 is a side view of an embodiment of a tank mount showing an alignment channel.
Fig. 42 is a top view of an embodiment of a tank mount also showing an alignment channel.
Fig. 43 is a bottom view of an embodiment of a tank mount.
Fig. 44 is a perspective view of an embodiment of a retaining cap.
Fig. 45 is a top view of an embodiment of a retaining cap.
Fig. 46 is a bottom view of an embodiment of a retaining cap.
Fig. 47 is a perspective view of an embodiment of the upper portion of a body.
Fig. 48 is a side view of an embodiment of the upper portion of a body.
Fig. 49 is a top view of an embodiment of the upper portion of a body.
Fig. 50 is a bottom view of an embodiment of the upper portion of a body.
Figs. 51A - 51C show a fluid transfer device assembly with flexible tubing and sample containers wherein the fluid transfer device is not actuated.
Figs. 52A - 52C show a fluid transfer device assembly with flexible tubing and a sample container attached wherein the fluid transfer device is actuated.
Fig. 53 is a cross-section of a fluid transfer device wherein the fluid transfer device is actuated.
Fig. 54A and 54B show a fluid transfer device, each in a cross-section, to illustrate embodiments with a plug that is displaceable upon actuation of an actuator arranged distal from a fluid transfer part/end.

### DETAILED DESCRIPTION

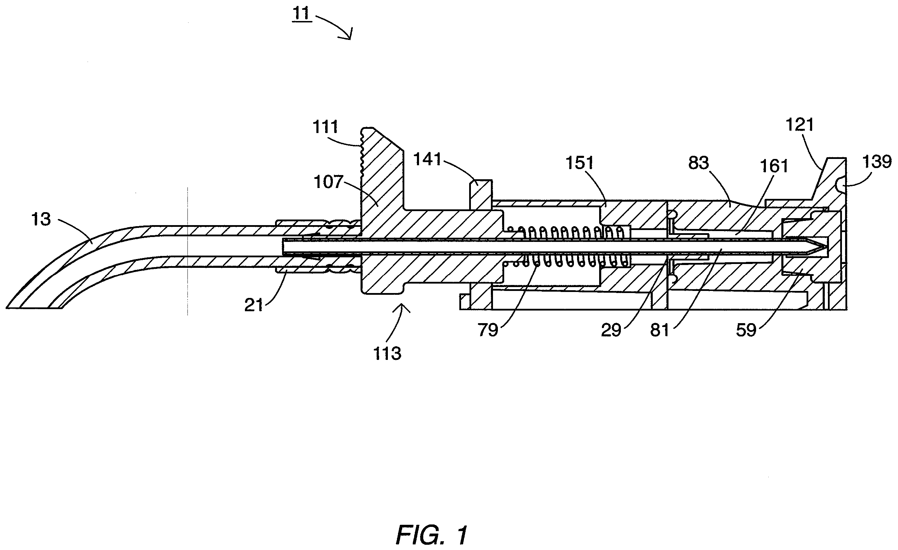

Referring now in more detail to the drawing figures, Fig. 1 is a cut-away or sectional view of a fluid transfer device **11.** In this embodiment, the device may comprise flexible tubing **13,** a crimped collar **21,** a septum **59,** a spring **79,** a cannula or sampling probe **81,** a lower portion of a body **83,** a tab assembly **113,** ridges **111** on a tab **107,** a tank mount **121,** a groove in the tank mount **139,** a retaining cap **141,** and an upper portion of a body **151.**

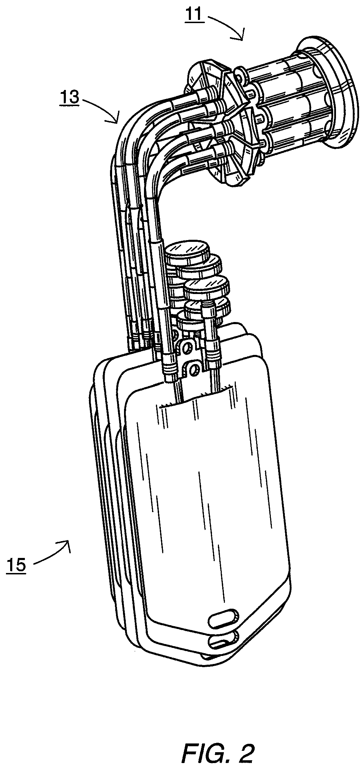

Fig. 2 is a perspective view of one embodiment of a fluid transfer device **11,** flexible tubing **13,** and sample containers **15** attached. The device may be used, for example, to take multiple fluid samples from a fluid receptacle, such as a tank, wherein a process is running. The samples may be taken simultaneously or over differing time intervals. The fluid transfer device **11** may be connected to a fluid receptacle, such as a tank, prior to a process being performed in the tank. The flexible tubing **13** may be connected to the fluid transfer device **11** prior to connecting to the fluid transfer device **11** to the tank. Likewise, the sample containers **15** may be connected to the flexible tubing **13** prior to connecting the flexible tubing **13** to the fluid transfer device **11** and before the fluid transfer device **11** is connected to a fluid receptacle, such as a tank. However, it is understood that the fluid transfer device **11,** the flexible tubing **13,** and the sample containers **15** may be attached in any order necessary to use the device to transfer fluid. In certain embodiments, the flexible tubing may be replaced in whole or part with rigid tubing. The device may be assembled and then rendered substantially aseptic, for example, by gamma irradiation.

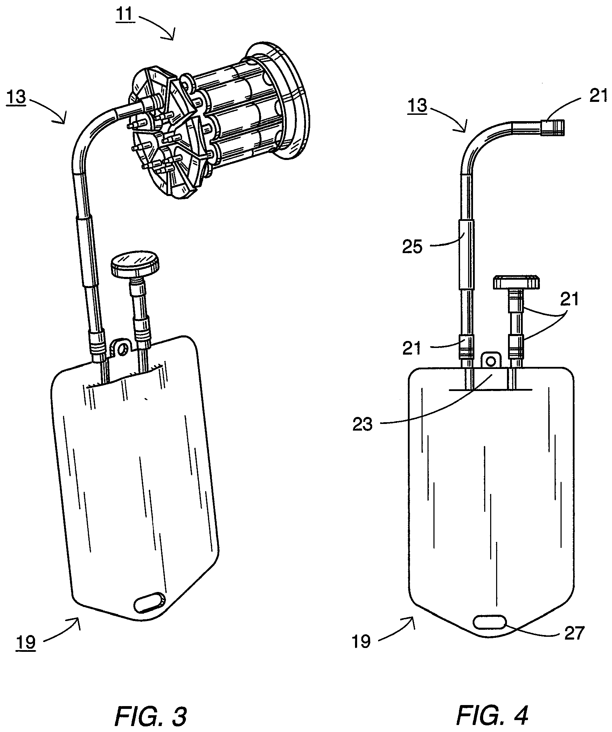

As shown in Fig. 3, the fluid transfer device **11** may be connected with a single fluid container **19** by way of flexible tubing **13.** In fact any number of fluid containers less than the total possible may be connected. Fluid containers suitable for use with the fluid transfer device include without limitation, bags, bottles, syringes, other tanks, tubing, manifolds, or any combination thereof.

As shown in Fig. 4, the flexible tubing **13** is connected to a sample container **19** by a crimped collar **21.** Likewise, the flexible tubing **13** may be connected to a fluid transfer device **11,** such as that depicted in Fig. 3, by a crimped collar **21.** However, the flexible tubing **13** and the fluid transfer device **11** can be connected by other means, such as by press- fit, an adhesive, or the like. Likewise, the flexible tubing **13** can be connected to the sample container in similar means. In the illustrated embodiment, the sample container includes a bag insert **23** comprising two connectors. The bag insert **23** can be configured to accept a plurality of connections. In the embodiment shown, a sleeve **25** surrounding the flexible tubing **13** also is shown.

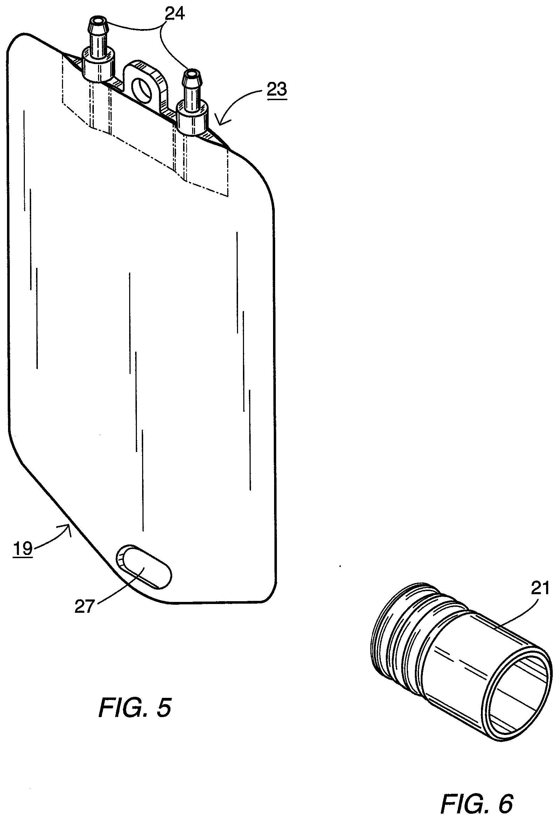

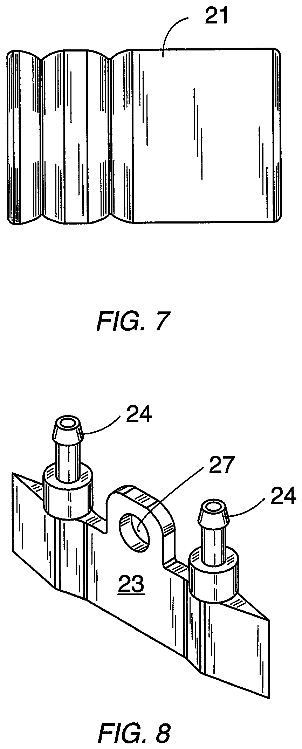

As shown in Fig. 5, an embodiment of the sample container **19** may comprise a thin bag that fills with fluid as a sample is taken. In the illustrated embodiment, the sample container **19** is shown with an opening **27** allowing the container to be hung, for example, on a hook. The sample container **19** is shown with a bag insert **23,** as shown in detail in Fig. 8. In the embodiment shown, a connection **24** can be inserted into flexible tubing **13.**

As shown in Fig. 6, a collar **21** is used to secure connections, such as between flexible tubing **13** and the fluid transfer device **11** (by way of the barbed connection on the tab discussed in more detail below). The collar **21** may be crimped to secure the connections using suitable tooling. In the embodiment illustrated in Fig. 6, the collar **21** is shown crimped. The collar **21** may also be used to connect the flexible tubing **13** to the sample container **19,** such as shown in Fig. 4. Fig. 7 is a side view of the collar **21** in a crimped state.

As shown in Fig. 8, an embodiment of a bag insert **23** is provided. The bag insert **23** shown in Fig. 8 comprises two connections **24.** In one embodiment, flexible tubing **13** (such as that shown in Fig. 4) is attached to one connection **24** and an air vent (not shown) may be connected to the other connection **24.** However, it is understood that other attachments may be connected to connections **24,** such as a luer injection site, hi another embodiment, the bag insert **23** has one connection **24.** In another embodiment the bag insert has more than two connections **24.** As shown in the embodiment in Fig. 8, an opening **27** is provided in the bag insert **23** so that a sample container **19** containing bag insert **23** (as shown in Fig. 5) may be hung from, for example, a hook. In one embodiment, the bag insert **23** is attached to the sample container **19** by heat sealing.

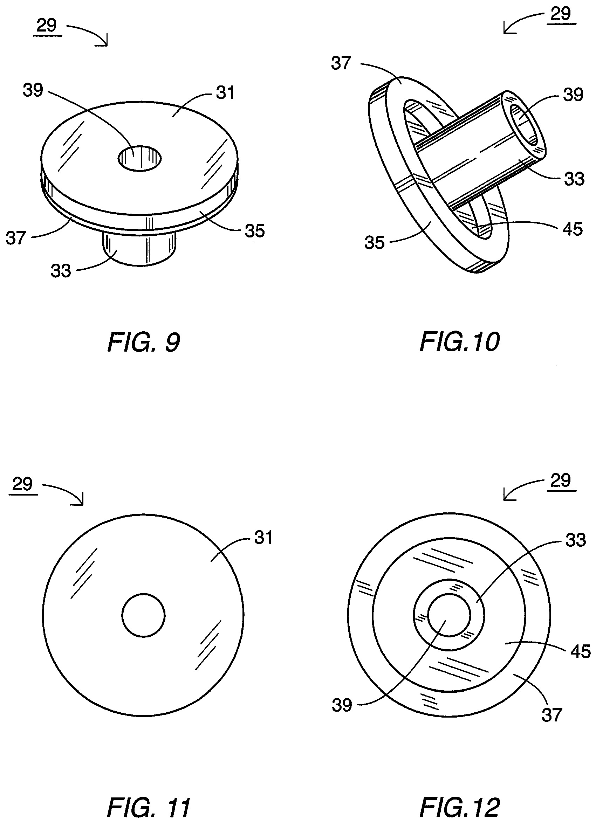

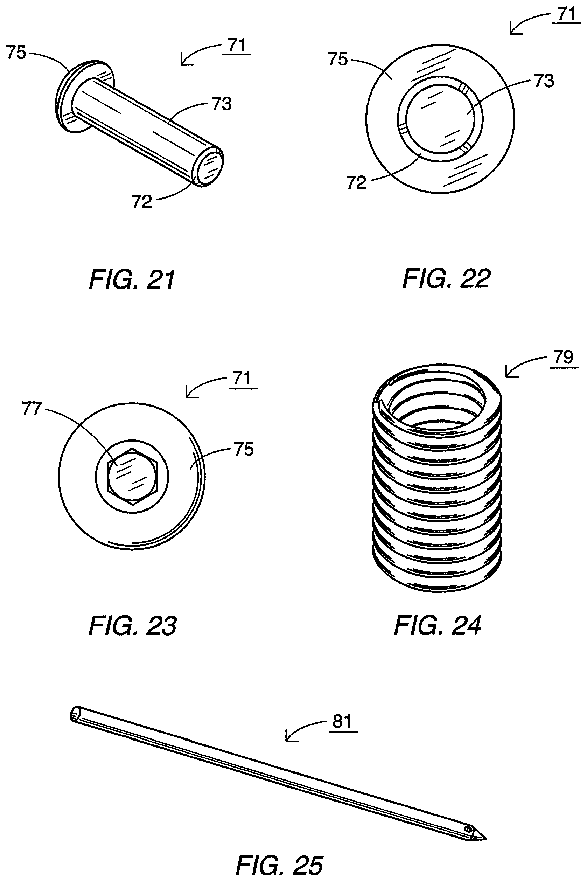

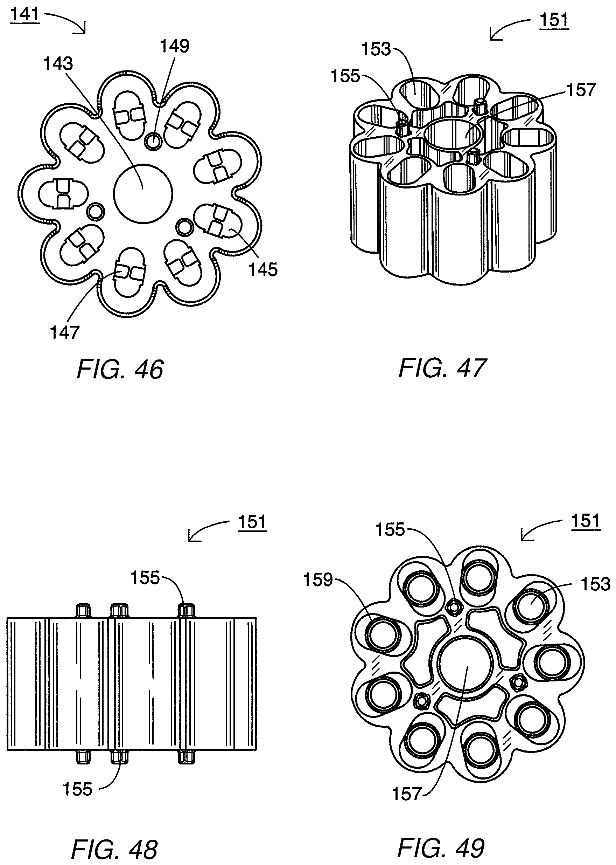

Figs. 9, 10, 11 and 12 show various views of an embodiment of a diaphragm **29** for sealing around and holding the cannula **81** within the body **151** (as shown in Fig. 46). The diaphragm is made of flexible material and is capable of stretching in at least the direction of its axis, in this illustration, the diaphragm is shown in an unstretched condition. The embodiment of the diaphragm **29** shown in Fig. 9 has a top face **31,** a central body **33,** a side **35,** an annular bead **37,** and a central opening **39.** Another view of the embodiment of the diaphragm **29,** is shown in Fig. 10. The diaphragm **29** shown in Fig. 10 has a central body **33,** a side **35,** an annular bead **37,** a central opening **39,** and a central membrane **45.** hi one embodiment, the central opening **39** is substantially cylindrical. In one embodiment, diaphragm **29** is constructed of silicone. In another embodiment, diaphragm **29** is constructed of a solvent resistant elastomer. In yet another embodiment, diaphragm **29** is constructed of a perfluoropolyether elastomer. However, it is understood diaphragm **29** may be constructed of any suitable material. As used in an embodiment of the fluid transfer device, a cannula (see Fig. 25) extends through the central opening **39** and is secured to the diaphragm **29** by molding, for example, the diaphragm **29** around the cannula when the diaphragm is produced. However, the diaphragm **29** may be secured to a cannula through other means such as with adhesives or sealants. It is further understood that the central opening **39** may have various shapes. Fig. 11 shows the top of one embodiment of a diaphragm, again in an unstretched state and, in particular, shows the top face **31** of the diaphragm. Fig. 12 depicts the bottom of one embodiment of a diaphragm **29** and, in particular, illustrates a central body **33,** an annular bead **37,** a central opening **39,** and a central membrane **45.**

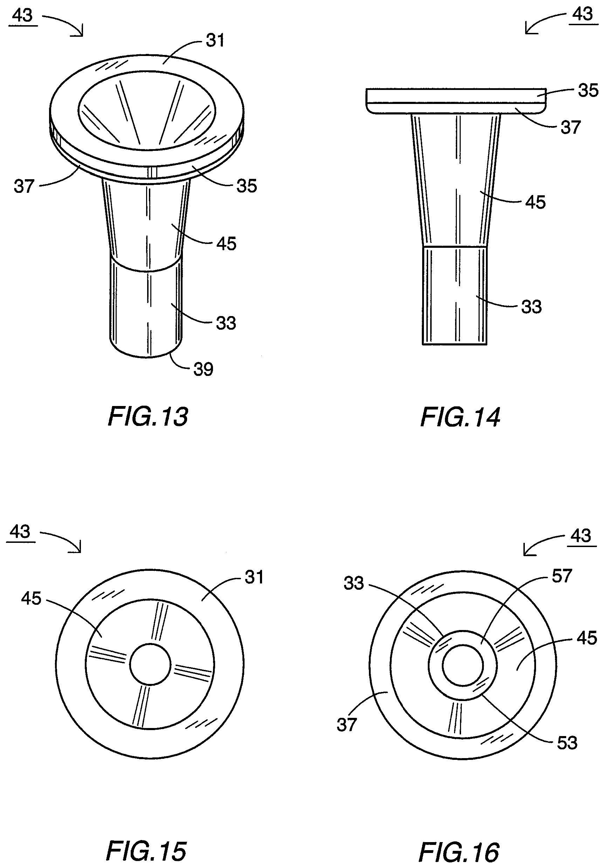

Fig. 13 illustrates the diaphragm as it appears when stretched along its axis. A central membrane **45,** now stretched, is again shown. Also shown are a top face **31,** a side **35,** an annular bead **37,** and a central opening **39.**

Fig. 14 is a side view of the stretched diaphragm **43.**

Fig. 15 is a top view of the stretched diaphragm **43.** Also shown is a top face **31** and a curved face of the stretched central membrane **45.**

Fig. 16 is a bottom view of an embodiment of a stretched diaphragm **43.** Also shown is a stretched central membrane **45,** a central body **33,** the exterior **53** of the central body **33,** and the bottom **57** of the central body **33.**

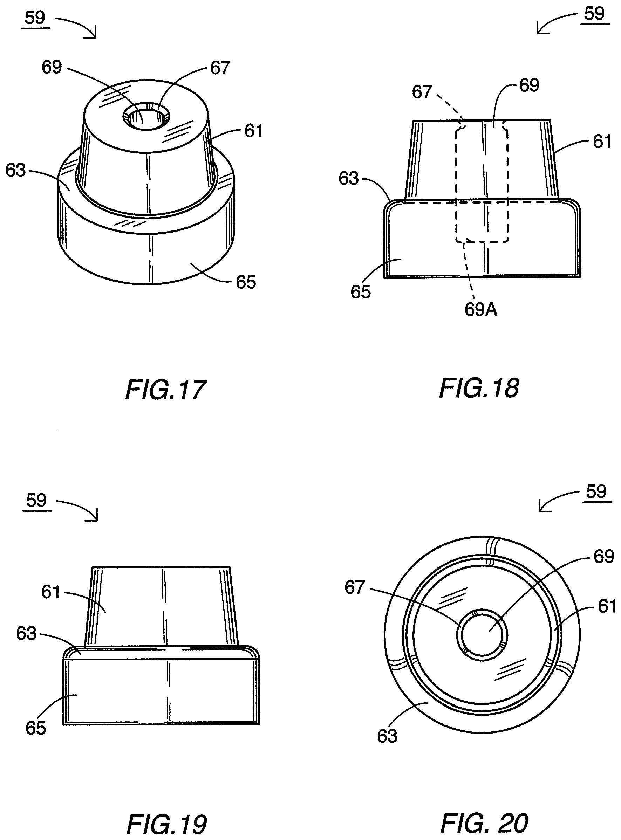

Fig. 17 shows an embodiment of a septum **59** that is pierceable and self-sealing. The septum **59** has an angle insert wall **61,** a rounded shoulder **63,** a side **65,** a rounded opening shoulder **67,** and a central cavity **69.** However, a septum that differs in configuration from septum **59** may be used provided that the septum forms an effective barrier in the fluid transfer pathway in a fluid transfer device. In one embodiment, septum **59** is constructed of silicone. In another embodiment, septum **59** is constructed of a solvent resistant elastomer. In yet another embodiment, septum **59** is constructed of a perfluoropolyether elastomer. However, it is understood that septum **59** may be constructed of any suitable material.

Fig. 18 is a side view of the septum **59** with interior surfaces shown in phantom line. The septum **59** had an angle insert wall **61,** a rounded shoulder **63,** a side **65,** a rounded opening shoulder **67,** a central cavity **69,** and the base **69**A of a central cavity **69.** In one embodiment of the fluid transfer device, the sharpened end of a cannula (such as that depicted in Fig. 25) is disposed in the central cavity **69** but the tip of the cannula is not piercing the base **69**A. In another embodiment of the fluid transfer device, the sharpened end of a cannula (such as that depicted in Fig. 25) is disposed in the central cavity **69** with its tip slightly piercing the base **69**A but not penetrating the base. The base of the central cavity **69** is preferably constructed of material that, once pierced by the cannula and the cannula is retracted, will close forming a seal. Preferable materials for construction are listed above.

Fig. 19 is another side view of the septum **59** is provided.

Fig. 20 is a top view of the septum **59.**

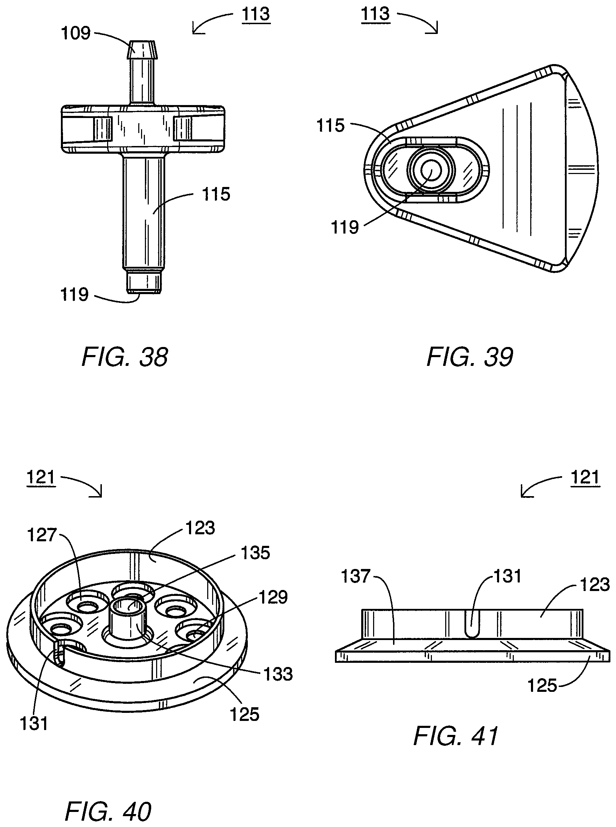

Fig. 21 shows an embodiment of a bolt **71,** having a shaft **73,** a head **75,** and a tapered leading edge **72.** The bolt is used to secure the fluid transfer device to a tank mount (see Fig. 40). As shown in Fig. 22, there is provided a bottom view of an embodiment of a bolt **71,** a shaft **73,** a head **75,** and a tapered leading edge **72.** Fig. 23 depicts a top view of an embodiment of a bolt **71,** a head **75,** and a drive shaft opening **77.** The drive shaft opening **77** is configured for a hex driver. However, the draft shaft opening may be configured for any suitable driver. In one embodiment, the bolt **71** is threaded. In another embodiment, the bolt **71** is a shoulder bolt that controls compression of the sampling device to a fluid vessel.

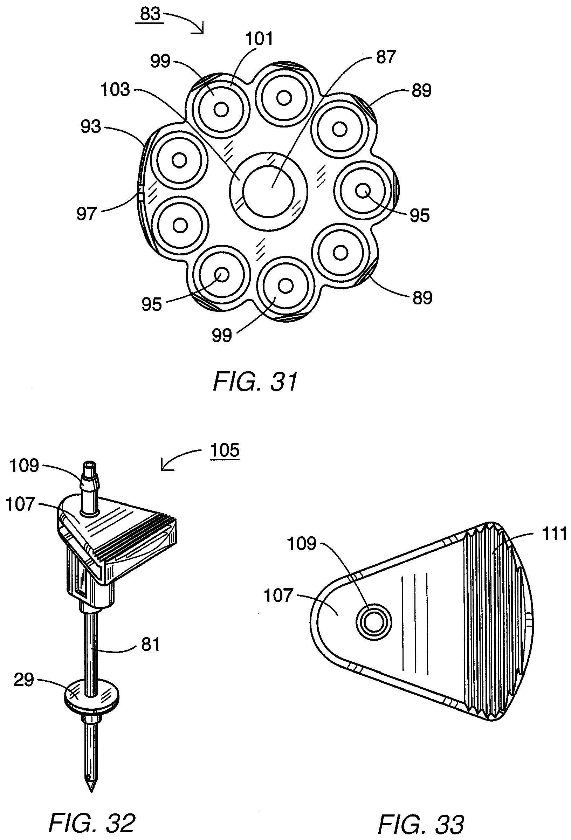

Fig. 24 shows a spring **79.** As described in more detail below, a spring may be used to provide bias to a tab assembly and cannula. The bias forces the tab assembly and cannula (see Fig. 32) back to its original retracted non-actuated stand-by position or substantially thereabout. In a preferred embodiment, the bias forces the cannula back into the septum after fluid is transferred thus leaving the tip of the cannula disposed within the septum, for example, in the base **69**A**.** m another embodiment, the bias leaves the tip of the cannula disposed within the central cavity **69.** In either embodiment, the tip of the cannula is maintained within the sealed portion of the passage extending through the body.

Fig. 25 illustrates a cannula **81** (sampling probe). In a preferred embodiment, the cannula **81** has a small circular opening in its tip to allow for the transfer of fluid, hi another embodiment, the cannula is replaced by a hypodermic needle. In a preferred embodiment, the cannula is disposed in and extends along an elongate passage within the body of the fluid transfer device **11.** In a preferred embodiment, the distal end of the cannula **81** is fitted with a Luer (not shown). In another embodiment, the distal end of the cannula **81** is fitted with a barb. In a preferred embodiment, the cannula **81** extends through the tab assembly **113** as depicted in Fig. 32.

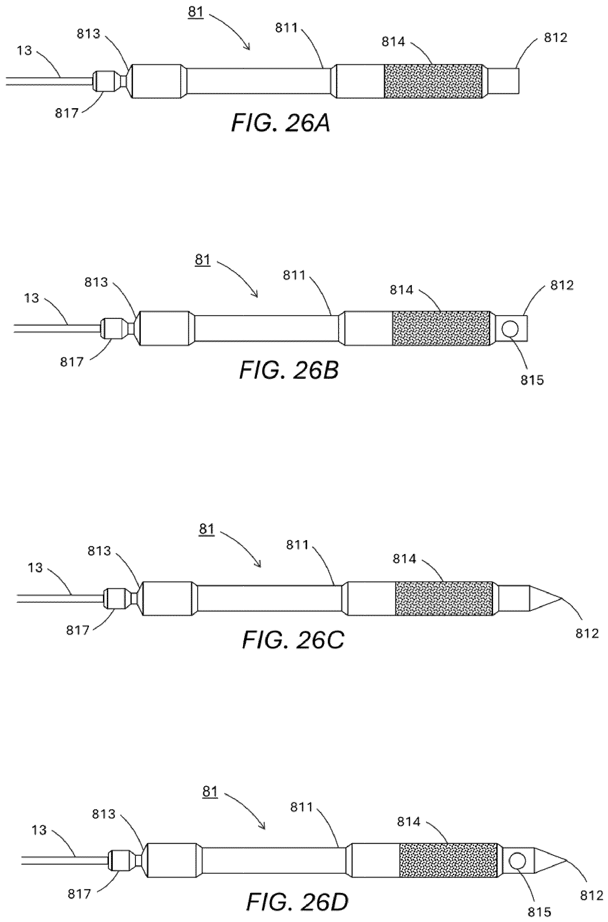

Figs. 26A - 26B illustrate other embodiments of a cannula or sampling probe **81.** It is to be understood that every time it is referred to a cannula in the present disclosure, the cannula can be the sampling probe as described hereafter.

The sampling probe **81** has a hollow shaft **811** with a proximal end **812** and a distal end **813.** The shaft **811** may have a general cylindrical shape. The shaft **811** may be made of stainless steel, a plastic material,a ceramic material, glass or fused silica. Among the plastic materials, PEEK, PE, PA, PBT, PP are preferred.

The shaft **811** comprises a filtration section **814** for filtered intake of sample from outside the shaft **811** to the inside of the shaft **811** through that section **814.** The filtration section **814** is preferably placed closer to the proximal end **812** than the distal end **813** of the shaft **811.** The filtration section **814** may angularly extend up to 360°, such as 45°, 90°, 135°, 180°, 225°, 270°, 315° and 380° around the longitudinal axis of the shaft **811.** Of course, the extent angle may be any degree between each of these values. When the filtration section **814** angularly extends to 360° around the longitudinal axis of the shaft **811,** the filtration section **814** has a tubular shape. The filtration section **814** longitudinally extends over a portion of the length of the shaft **811.** The filtration section **814** may longitudinally extend 1 to 300 mm, preferably 10 to 100 mm over the length of the shaft **811.**

The filtration may be a radial (for instance centripetal) filtration due to a longitudinal spacing between the proximal end **812** and a proximal end of the filtration section **814.**

The filtration section **814** may have through pores of 0.1 to 50 µm, preferably 0.2 to 5 µm, still preferably 0.3 to 2 µm in diameter. The filtration section **814** may be made of a filtration membrane. The filtration membrane may be made of ceramic, such as sintered ceramic. The filtration membrane may be a membrane that can withstand a pressure difference of 25 to 150 kPa (gauge pressure). The thickness of the filtration membrane is preferably 0.1 to 5 mm.

The filtration section **814,** which may extend between two filtration section ends, may be of partially or entirely circular cross-section and/or surrounds an inner space that is part of the central hollow of the shaft **11.**

The shaft **811** may further have an opening **815** for unfiltered intake of sample from outside the shaft **811** to the inside of the shaft **811** through that opening **815** (as illustrated in Figs. 2B and 2D). The opening **815** may also be used as a back-up solution when the filtration section **814** becomes clogged. The opening **815** may be a bored hole made through the wall of the hollow shaft **811.** Preferably, the opening **815** is adjacent to the filtration section **814** of the shaft. The opening **815** may be closer to the proximal end **812** than the filtration section **814** of the shaft (as illustrated in Figs. 2B and 2D). Alternatively, the opening **815** may be farther from the proximal end **812** than the filtration section **814** of the shaft.

Preferably, the shaft **811** comprises two separate fluid paths (not illustrated) therethrough for separate collection of samples through each of the filtration section **814** and the opening **815.** Here, 'separate' means that both fluid paths are not in fluid connection to each other. Thus, a first fluid path is in fluid connection with the filtration section **814** for the collection of a filtered sample; and a second fluid path is in fluid connection with the opening **815** for the collection of an unfiltered sample. For example, the shaft **811** is made of two concentric cylinders forming the two fluid paths: a central fluid paths formed by the inner wall of the smaller cylinder and a lateral fluid path formed by the outer wall of the smaller cylinder and the inner wall of the larger cylinder. The opening **815** may be in fluid connection with the central fluid paths and the filtration section **814** is in fluid connection with the lateral fluid path; for example, when the opening **815** is closer to the proximal end **812** than the filtration section **814.** Alternatively, the opening **815** may be in fluid connection with the lateral fluid paths and the filtration section **814** is in fluid connection with the central fluid paths; for example, when the opening **815** is farther from the proximal end **812** than the filtration section **814.**

Figs. 26A and 26B show that the proximal end **812** of the shaft is blunt, i.e. is not capable of piercing a septum. In this case, the septum **59** may already be pierced or present a resealable opening through which the proximal end **812** of the shaft is displaced for intake of sample. In other words, the sampling probe **81** can be actuated from its stand-by position in which the filtration section **814** (and the opening **815** when provided) is on the inner side of the septum **59** to an intake position where the filtration section **814** (and the opening **815** when provided) has been displaced to the outer side of the septum **59.** When the sampling probe **81** is retracted back to its stand-by position, the septum **59** sealed itself to guaranty fluid tightness. In another embodiment, the proximal end **812** of the shaft **811** is disposed in the opening of the septum **59** when the sampling probe **81** is in its stand-by position.

Alternatively, the proximal end **812** of the shaft may be pointed (generally forming a tip) or have any shape enabling it to puncture through the septum as illustrated in Figs. 26C and 26D, thus creating the resealable opening.

The sampling probe **81** may comprise a tubing connector **817** at the distal end **813** of the shaft **811** for the connection of the shaft **811** to a flexible tubing **13.** For example, the tubing connector **817** may be a luer lock. The sampling probe **81** may comprise two tubing connectors **13** at the distal end **813** of the shaft **811** for the connection of the shaft **811** to two flexible tubings **13;** for example for collecting a filtered sample through one of the flexible tubing and collecting an unfiltered sample through the other flexible tubing. When the shaft comprises two fluid paths, each path may thus be connected to one of the flexible tubings.

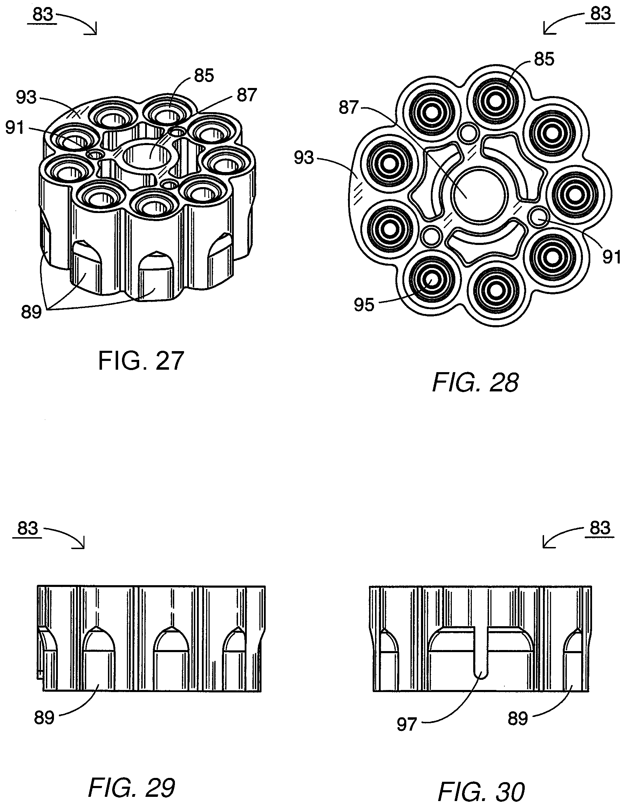

Fig. 27 shows an embodiment of the lower portion of the body **83** of the fluid transfer device. In this embodiment, the lower portion of the body **83** is configured so that multiple fluid transfer devices are joined together. In the illustrated embodiment, a seat **85,** comprising an annular groove, is provided where a diaphragm, such as the diaphragm **29** illustrated in Fig. 9, may be sealingly attached. Seat **85** may be configured with contours that match the annular bead **37** of diaphragm **29.** The body **83** has a central opening **87,** one or more alignment openings **91,** and angled faces **89.** The central opening **87** accommodates the bolt **71** when the fluid transfer device is attached to tank mount **121** (as shown in Fig. 40). The alignment openings **91** pair with alignment posts discussed in more detail below. In a preferred embodiment, the lower portion of the body **83** includes an extended face **93** that further includes an alignment key discussed in more detail below. The lower portion of the body **83** may be constructed out of any suitable material. In a preferred embodiment, the lower portion of the body **83** is constructed out of glass filled polyester. In another embodiment, the lower portion of the body **83** is constructed of polyvinylidene fluoride. In another embodiment, the lower portion of the body **83** is constructed out of polycarbonate which provides high temperature resistance. In another embodiment, the lower portion of the body **83** is constructed of polyether ether ketone (PEEK). In yet another embodiment the lower portion of the body **83** is constructed of Ultem^{®} (polyetherimide).

Fig. 28 illustrates an embodiment of a lower portion of the body **83,** which may include a seat **85** that receives a diaphragm **29** (such as the one depicted in Fig. 9), a central opening **87,** an alignment opening **91,** an extended face **93,** and a passage **95** extending through the lower body portion **83.**

As shown in Fig. 29, the lower body portion of the body **83** may be formed with angled faces **89** to facilitate a fit with the tank mount (described below). The embodiment illustrated in Fig. 30 provides an extended face **93** and an alignment key **97** which corresponds to an alignment slot in the tank mount.

Fig. 31 is a bottom view of an embodiment of a lower portion of a body **83** including a central opening **87,** angled faces **89,** an extended face **93,** passages **95** through the body which also serve as alignment apertures to guide the cannula **81,** an alignment key **97,** septum recesses **99,** a concave shoulder **101** within the septum recess **99,** angled faces **89** that accommodate the tank mount **121,** and a shoulder **103** to slide onto tank mount stud **133** (as shown in Fig. 40). In one embodiment, the septum recesses **99** are configured to receive septa (as depicted in Figs. 17-20) with the rounded shoulder **63** of a septum mating with the concave shoulder **101** within the septum recess **99.** In one embodiment, the septa are held in the septum recess **99** when the bolt **71** is secured to the tank mount (discussed below) thereby securing the tank mount to the lower portion of the body **83.** In another embodiment, the septum is held in the septum recess **99** by silicone adhesive.

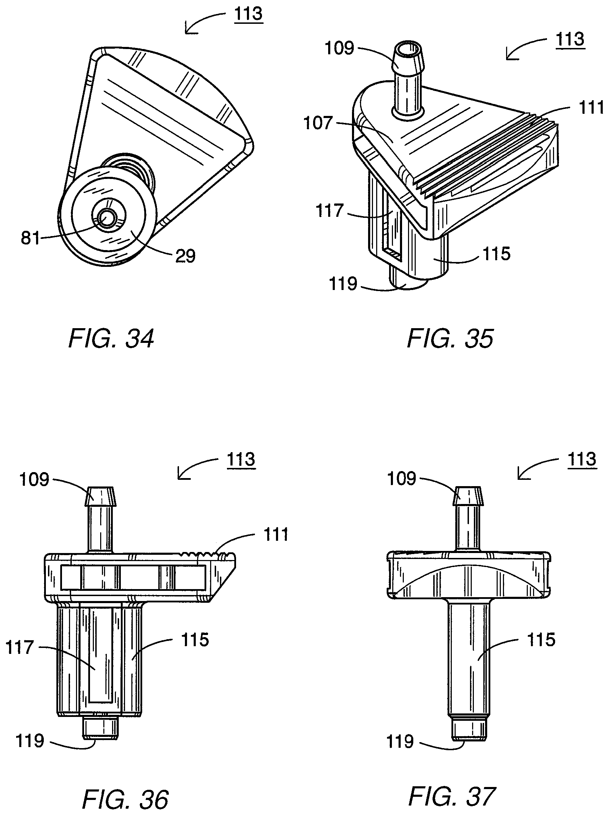

Fig. 32 illustrates an embodiment of a cannula, a diaphragm, and tab assembly **105.** A cannula **81** is shown to which an unstretched diaphragm **29** is secured. There also is provided a tab **107** and a barbed end **109** through which the cannula **81** may extend. Fig. 32 also depicts the cannula **81** extending through and secured to the diaphragm **29.** In a preferred embodiment, diaphragm **29** is molded to cannula **81.** As shown in Fig. 33, there is provided a top view of an embodiment of a tab **107,** a barbed end **109,** and ridges **111** that facilitate operation of the fluid transfer device, m one embodiment, tab assembly **113** is over-molded cannula **81.** In the embodiment shown in Fig. 33, the ridges **111** provide a surface that an operator may depress to displace the cannula **81** longitudinally thereby moving the cannula from the fluid transfer device into a fluid vessel, such as a tank. Fig. 34 depicts a bottom view of an embodiment of a cannula and tab assembly **113,** a diaphragm **29,** and a cannula **81.**

Fig. 35 shows a tab assembly **113** comprising a tab **107,** a barb **109** (to which a cannula is fluidly connected from beneath and to which flexible tubing **13** may be connected from above), ridges **111** to facilitate operation as discussed above, a tab guide **115** to guide the tab during use, and an axial channel **117** in the tab guide **115.** A cannula may be connected to the tab at the opening **119.** Furthermore, a spring, such as that depicted in Fig. 24, may be fitted around the extension in which opening **119** is located. Such arrangement is depicted in detail in Fig. 1. As shown in Fig. 36, there is provided a side view of an embodiment of a tab assembly **113,** a barb **109,** ridges **111,** a tab guide **115,** an axial channel **117,** and an opening **119** to which a cannula may be connected.

Fig. 37 illustrates a front view of an embodiment of a tab assembly **113,** a barb **109,** a tab guide **115,** and an opening **119.** Similarly, as shown in Fig. 38, there is provided a back view of an embodiment of a tab assembly **113,** a barb **109,** a tab guide **115,** and an opening **119.** As shown in Fig. 39, there is provided a bottom view of an embodiment of a tab assembly **113,** a tab guide **115,** and an opening **119.**

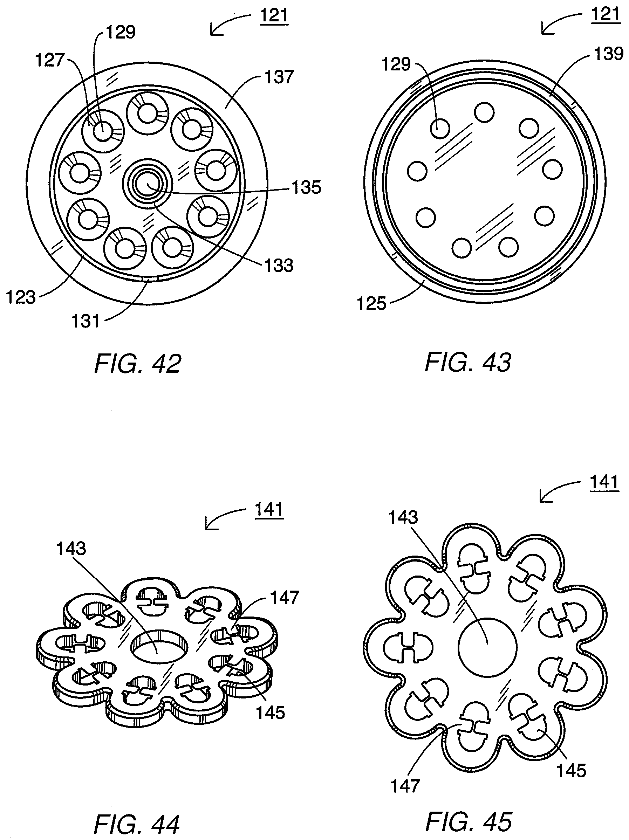

Fig. 40 depicts an embodiment of a tank mount **121.** Also provided is a wall **123,** a plate **125,** recesses **127** in the plate **125** for septa (such as those depicted in Figs. 17-20), openings **129** in the recesses **127,** an alignment slot **131** that receives the alignment key **97** (as shown, for example, in Figs. 30 and 31), a threaded stud **133** in which an opening **135** is located. In one embodiment, threaded stud **133** is a female threaded stud. In one embodiment the threaded stud **133** receives a bolt, such as bolt **71** depicted in Figs. 21, 22 and 23. As shown in Fig. 41, there is provided a side view of an embodiment of a tank mount **121.** Also provided are a wall **123,** a plate **125,** and an alignment slot **131.** Fig. 42 depicts top view of an embodiment of a tank mount **121** and provides a wall **123,** an angled portion **137** of a plate **125,** recesses **127,** openings **129,** an alignment slot **131,** a threaded stud **133,** and an opening **135** in the threaded stud **133.** During actuation the tip of the cannula **81** passes through the openings **129** during actuation. Fig. 43 depicts a bottom view of an embodiment of a tank mount **121,** and provides a plate **125,** openings **129,** and a groove **139.** In one embodiment, a seal (not shown), such as an O-ring or hygienic gasket, is provided in the annular groove. Upon affixation to a tank (also not shown), a seal is formed between a fluid transfer device and a tank. The tank mount may be configured with one or more openings **129.** In one embodiment, the tank mount **121** is substantially aseptic. The tank mount **121** may be constructed out of any suitable material. In one embodiment the tank mount is constructed out of titanium, m another embodiment the tank mount is constructed out of stainless steel.

Fig. 44 shows a retaining cap **141,** a central opening **143,** and openings **145** through which tab guides, such as those depicted in Figs. 35 and 36, pass, and detents **147.** In the assembled fluid transfer device, the retaining cap **141** is located at the distal end of the upper portion of the body (discussed below). The retaining cap **141** may be constructed of a flexible material, such as polycarbonate or polyolefin. In a preferred embodiment, the retaining cap is constructed of polycarbonate. However, the retaining cap may be constructed from any suitable material. Fig. 45 depicts a top view of an embodiment of a retaining cap **141.** Fig. 46 depicts a bottom view of a retaining cap **141,** a central opening **143,** openings **145,** detents **147,** and alignment openings **149.** In a preferred embodiment, the detents **147** travel in the axial channel **117** of the tab guide **115.** In one embodiment, the bottom surface of tab **107** contacts the top retaining cap **141,** thereby limiting the axial travel of tab assembly **113** and compression of the interior components of fluid transfer device **11.** When the tab **107** is retracted in a distal direction, the extended detents **147** keep the tab assembly **113** from coming out of the retaining cap **141** and potentially tearing the diaphragm and breaking the substantially aseptic state of the fluid transfer device and, in particular, the substantially aseptic state of the pathway through which fluid travels.

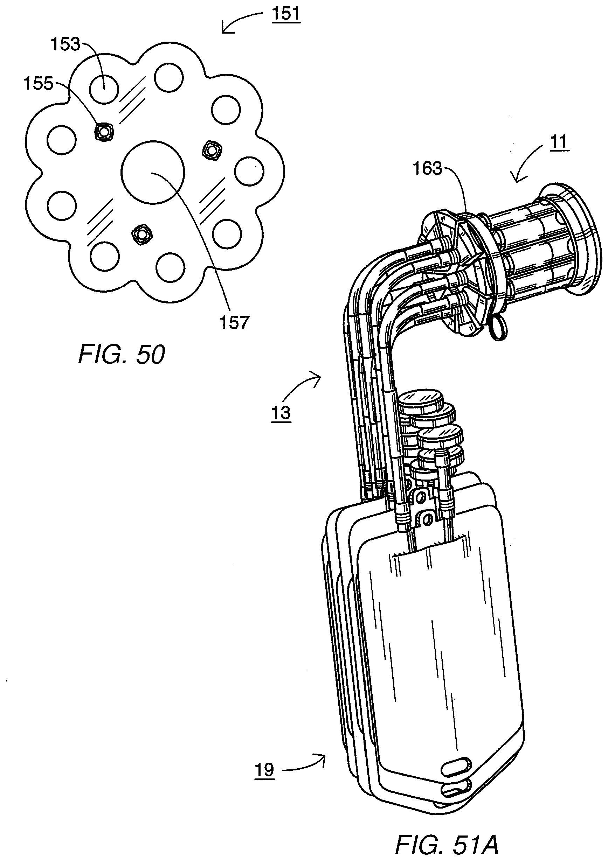

As shown in Fig. 47, an embodiment of an upper portion of the body **151** is provided along with openings **153** that extend through the upper portion of the body **151,** alignment posts **155,** and a central opening **157.** The embodiment depicted in Fig. 48 provides a side view of one embodiment of an upper portion of the body **151** and provides for alignment posts **155** on both the top and bottom of the upper portion of the body **151.** In one embodiment, when the fluid transfer device is assembled, the alignment posts **155** mate with the alignment openings **149** on the retaining cap **141** and the alignment openings **91** in the lower portion of the body **83.** Fig. 49 depicts a top view of an embodiment of an upper portion of the body **151** and provides openings **153,** alignment posts **155,** a central opening **157,** and annular shoulders **159** located in openings **153** in the upper portion of the body **151.** In one embodiment, when the fluid transfer device is assembled, a spring, such as the one depicted in Fig. 24, is placed in the openings **153** and rests on the shoulders **159.** When a tab and cannula assembly is placed in the openings **153,** the spring provides bias, causing a tab that has been depressed to return to its original retracted non-actuated stand-by position or substantially thereabout. Fig. 50 depicts a bottom view of the upper portion of the body **151** and provides openings **153,** and alignment posts **155.**

The upper portion of the body **151,** the lower portion of the body **83,** and the retaining cap **141,** as well as any other components made from thermoplastic materials may be joined by ultrasonic welding or by a thermoset adhesive.

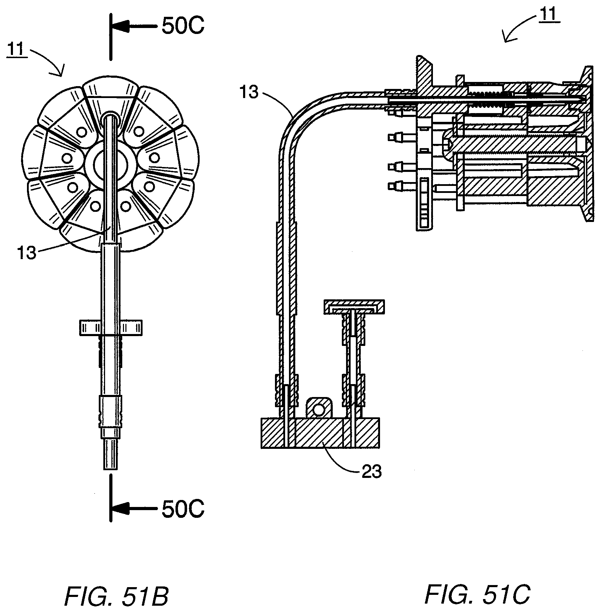

Figs. 51A, 51B, and 51C illustrate an assembled fluid transfer device **11** prior to actuation; that is, the tabs shown on the fluid transfer device are in their original, rest, or retracted stand-by positions. The fluid transfer device may be used in a manner depicted in Fig. 51A wherein multiple sample containers are fluidly connected to the fluid transfer device by way of multiple pieces of flexible tubing **13.** Also shown in Fig. 51A is safety retention band **163.** Safety retention band **163** holds tabs **107** in place until operation and prevents unintentional longitudinal displacement of tabs **107.** Safety retention band **163** is removed prior to use.

The fluid transfer device may also be used in a manner depicted in Fig. 51B, wherein only one sample container is connected by one piece of flexible tubing. Fig. 51B is a front view of a fluid transfer device 11 connected to flexible tubing **113.**

In the embodiments shown in Figs. 51A, 51B, and 51C, it is understood that the fluid transfer device contains multiple individual fluid transfer devices joined together to form a cartridge to facilitate multiple transfers. It is understood the fluid transfer device provided herein may be a single transfer device or joined together to provide for multiple transfer capabilities. In a preferred embodiment, the fluid transfer device comprises nine individual fluid transfer devices joined together, such as that depicted in Figs. 51A and 51B.

Fig. 51C depicts a cross-section of an embodiment of a fluid transfer device. As illustrated, the fluid transfer device **11** is connected to flexible tubing which, in turn, is connected to a bag insert **23.**

Referring back to Fig. 1, there is provided in cross-section a preferred embodiment of a fluid transfer device **11** and illustrates how the majority of the various components described above operate together. As illustrated in Fig. 1, the fluid transfer device is shown prior to usage, that is, with the cannula **81** in its original, rest, or retracted stand-by position. The fluid transfer device **11** comprises a tank mount **121** containing an annular groove **139.** Also shown is the septum **59,** a lower portion of the body **83,** a diaphragm **29** (in an unstretched state), an upper portion of the body **151,** a spring **79,** a retaining cap **141,** a tab assembly **113,** ridges **111** on the tab **107,** a collar **21,** and flexible tubing **13.** The passage **161** in the lower body portion **83** comprises an elongate passage extending through the body of the fluid transfer device **11.** The elongated passage has a proximal end and a distal end. In a preferred embodiment, passage **161** is substantially aseptic and sealed from the environment. In this preferred embodiment, the cannula **81** is disposed in and is longitudinally displaceable along the elongate passage with the tip of the cannula **81** disposed in the central cavity of the septum **59.** As illustrated, a septum **59** seals the elongate passage at a proximal location. The septum **59** is both pierceable and self-sealing. Also illustrated is a diaphragm **29** that seals the elongate passage at a second, more distal location, from the septum **59.** In this preferred embodiment, the portion of the elongate passage between the septum **59** and the diaphragm **29,** and labeled as **161,** is substantially aseptic. Fig. 32 also depicts the cannula **81** extending through and being secured to the diaphragm **29.**

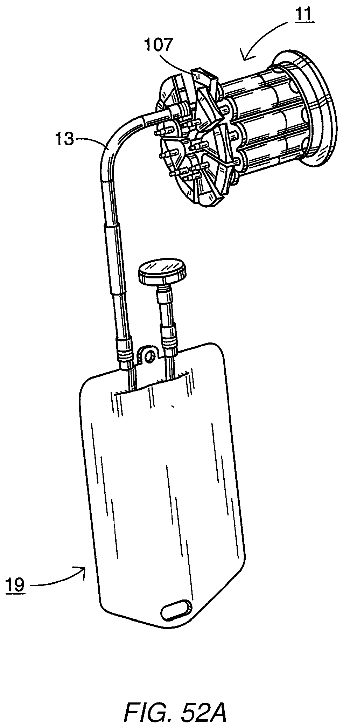

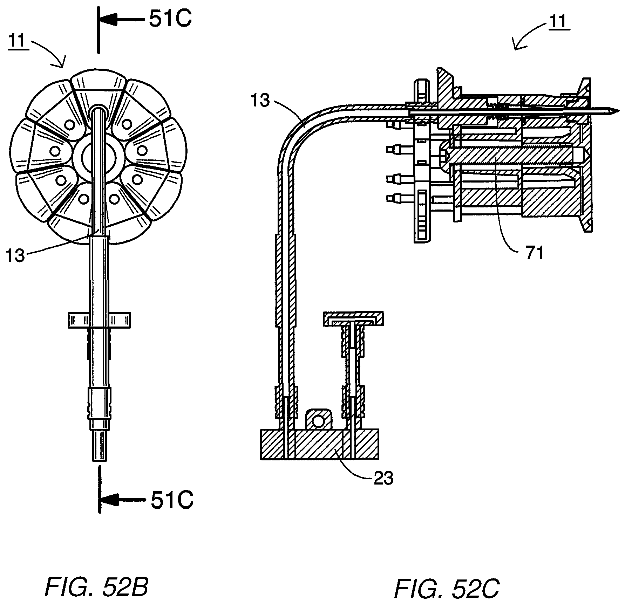

Figs. 52A, 52B, and 52C illustrate an assembled fluid transfer device **11** during actuation, that is, a tab 107 is shown on the fluid transfer device **11** in a depressed state. The fluid transfer device may be used in a manner depicted in Fig. 52A wherein a single sample container **19** is fluidly connected to the fluid transfer device by way of flexible tubing **13.** In the embodiments shown in Figs. 52A, 52B, and 52C, it is understood that the fluid transfer device contains multiple individual fluid transfer devices joined together to form a cartridge to facilitate multiple transfers. The fluid transfer device provided herein may also be a single transfer device or joined together to provide for multiple transfer capabilities. In a preferred embodiment, the fluid transfer device comprises nine individual fluid transfer devices joined together, such as that depicted in Figs. 52A and 52B in a cartridge configuration.

Fig. 52C depicts a cross-section of an embodiment of a fluid transfer device **11.** As illustrated, the fluid transfer device **11** is connected to flexible tubing **13** which, in turn, is connected to a bag insert **23.** Fig. 52C depicts the bolt **71** securing the components of the fluid transfer device together.

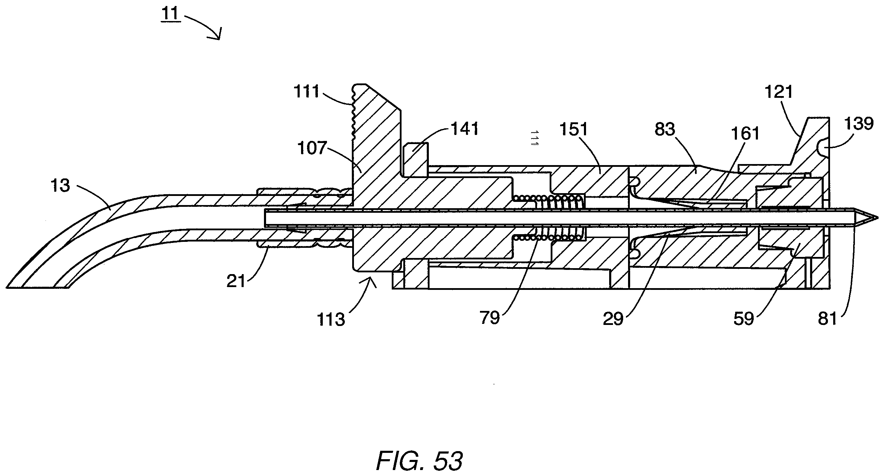

Similar to Fig. 1, Fig. 53 illustrates in cross-section a preferred embodiment of a fluid transfer device **11** and illustrates how the majority of the various components described above operate together. However, unlike Fig. 1, as illustrated in Fig. 53, the fluid transfer device is shown during use, that is, with the cannula **81** extending through the septum **59.** The fluid transfer device **11** comprises a tank mount **121** containing an annular groove **139.** Also shown is the septum **59,** a lower portion of the body **83,** a diaphragm **29** (in a stretched state), an upper portion of the body **151,** a spring **79,** a retaining cap **141,** a tab assembly **113,** ridges **111** on the tab **107,** a collar **21,** and flexible tubing **13.** The passage **161** comprises an elongated passage extending through the body of the fluid transfer device **11.** The elongated passage has a proximal end and a distal end. In a preferred embodiment passage **161** is substantially aseptic and sealed from the environment. As discussed above, in a preferred embodiment, the cannula **81** is disposed in and longitudinally displaceable along the elongated passage with the tip of the cannula **81** disposed in the central cavity of the septum **59.** As illustrated, a septum **59** seals the elongate passage at a proximal location. The septum **59** is both pierceable and self-sealing. Also illustrated is a diaphragm **29** that seals the elongate passage at a second, more distal location, from the septum **59.** In this preferred embodiment, the portion of the elongate passage between the septum **59** and the diaphragm **29,** and labeled as **161,** is substantially aseptic and remains substantially aseptic during and after actuation. Upon actuation, the proximal end of the cannula may be drawn into passage **161.** Because passage **161** is substantially aseptic and sealed from the environment, it prevents contamination of the fluid being transferred as well as contains any fluid that may flow out of the proximal end of cannula **81** during fluid transfer. Fig. 53 also depicts the cannula **81** extending through and being secured to the diaphragm **29.** Thus, when the cannula **81** is longitudinally displaced, the diaphragm **29** stretches to accommodate the resultant movement of the cannula **81** while maintaining a seal about the cannula. In a preferred embodiment, the fluid transfer device comes pre-sterilized. In yet another preferred embodiment, the entire passageway that fluid will travel is substantially aseptic until use. For example, and referring to Fig. 1, the tank mount **121,** septum **59,** cannula **81,** passage **161,** diaphragm **29,** and flexible tubing **13** are all substantially aseptic. By rendering and maintaining the pathway that fluid travels substantially aseptic, the fluid may be transferred from one vessel to another with risk of contamination to the fluid.

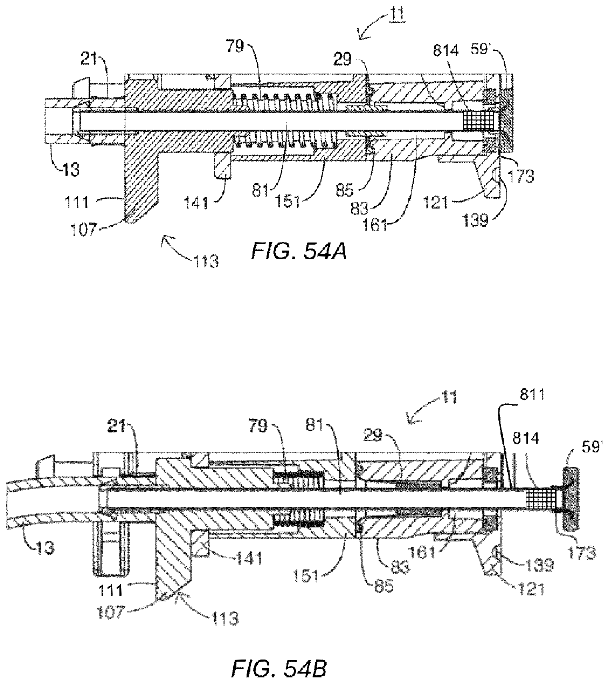

Now referring to Figs 54A-54B, it can be seen embodiments of a fluid transfer device 11 with a kind of actuation part that corresponds substantially to the actuation part (typically including the tab **107**) of Figs 1 and 53, while a diaphragm **29** is also included. Since the fluid transfer device 11 corresponds to a certain extent to the fluid transfer device of Fig. 53 (for instance with an elongate passage through the device, the flexible tubing **13,** a crimped collar **21,** a spring **79,** a longitudinally displaceable substantially hollow shaft forming the cannula **81,** a lower portion of a body **83,** therefore reference is made in particular to the differences with regard to the embodiment of Fig. 53.

In this embodiment, a plug **59'** is attached to the proximal end of the cannula. The plug **59',** forming an enlarged end for instance, is secured to the cannula **81** using supports **173.** The plug **59'** is thus selectively movable by an actuation exerted at the opposite end, using the tab **107** or similar actuation part. In Fig. 54A, the plug **59'** can seal the proximal end of the shaft **811,** so that the access provided by the filtration section **814** is not in fluid communication with the fluid of the tank. No pierceable septum or similar construction with sharpened end is required with such arrangement.

The plug **59'** may be constructed from silicone or, preferably, from platinum-cured silicone. The plug 59' may also be constructed from a solvent resistant fluoroelastomer, such as a perfluoropolyether elastomer. However, it is understood that plug **59'** may be constructed of any suitable material. In FIG. 54A, the plug **59'** is located outside the proximal end of the passage prior to displacement of the shaft from its first/initial/stand-by position, which is a retracted position. However, the plug **59'** may also be located at least partially within the inside the passage prior to displacement of the shaft/cannula 81 from its stand-by/retracted position. The plug **59'** may be shaped and located to effectively seal the proximal end of the passage when the cannula **81** is in its retracted position.

The shaft 811 of the cannula/sampling probe 81 is attached to and extends through tab assembly **113** on the distal end of the device. In operation the shaft 811 moves between two positions. In its first/retracted position, the shaft is displaced toward the distal end of the passage, as shown in FIG. 54A, preferably with return-effect of the spring 79 or similar return-effect means. While the shaft 811 is in this first position, the plug **59'** seals the passage and the diaphragm **29** seals the passage at a location distal from the plug **59'** and thus creates the substantially aseptic chamber/passage **161.**

In its second position forming an intake position, as shown in FIG. 54B, the shaft **811** is displaced in a proximal direction toward the opened proximal end of the passage, for example, by a user depressing the tab **107** and pushing the sampling probe proximally into a fluid vessel/tank. The longitudinal displacement of the sampling probe/cannula **81** towards the proximal end of the elongate passage causes the plug **59'** to be displaced away from the opened end, possibly with the filtration section **814** passing through the proximal opened end and/or with the filtration section **814** close to this proximal opened end to allow filtration of fluid before it enters the interior of the hollow shaft **811.** A fluid transfer with filtration is thus also allowed in the intake position of the hollow shaft **811** that carries the plug **59'.** The fluid then travels through the shaft **811,** through flexible tubing **13** and typically into a fluid sample container. The shaft **811** is maintained in this intake position until a sufficient sample of fluid is collected. Alternatively, fluid or media may be added to a fluid vessel by forcing the fluid or media to be added along this fluid pathway and into the fluid vessel.

When the shaft **811** is in its second/intake position, the diaphragm **29** stretches while maintaining a seal around the shaft. Also provided is a kit containing a fluid transfer device **11** as described herein, that is, comprising one or more bodies joined together, one or more lengths of flexible tubing **13** as described herein, a plurality of sample containers **19** as described herein, and a tank mount **121** as described herein.

The fluid transfer device **11** may be assembled and then the entire device or components thereof may be rendered substantially aseptic by, for example, gamma radiation. In another embodiment, the entire device or components thereof may be rendered substantially aseptic by exposure to steam above 1210°C for a period of time long enough to eliminate microorganisms. In yet another embodiment, the entire device or components thereof may be rendered aseptic by chemical treatment, such as with ethylene oxide (ETO). In a preferred embodiment, the entire device is rendered substantially aseptic by gamma radiation. Once rendered substantially aseptic, the device may be appropriately packaged and stored to maintain the substantially aseptic state until ready for use.

All dimensional information presented herein and included in the drawings is intended to be illustrative and not intended to limit the scope of the invention.

The foregoing descriptions of fluid transfer devices illustrate and describe various embodiments considered to represent best modes of carrying out the invention. As various changes can be made in the above embodiments without departing from the scope of the fluid transfer device disclosed and claimed herein, it is intended that all matter contained in the above description or shown in the accompanying drawings shall be interpreted as illustrative and not limiting. Furthermore, the scope of the invention covers various modifications, combinations, alterations, etc., of the above-described embodiments that all are within the scope of the claims. Additionally, the disclosure shows and describes only selected embodiments of the invention, but the invention is capable of use in various other combinations, modifications, and environments and is capable of changes or modifications within the scope of the inventive concept as expressed herein, commensurate with the above teachings, and/or within the skill or knowledge of artisans in the relevant art. Furthermore, certain features and characteristics of each embodiment may be selectively interchanged and applied to other illustrated and non-illustrated embodiments of the invention without departing from the scope of the invention.

### Examples

### Example 1:

Example 1 is a fluid transfer device which comprises a body with:
an elongate passage extending through the body and having a proximal end and a distal end;
a septum sealing the passage at a first location, the septum being self-sealing;
a diaphragm sealing the passage at a second location intermediate the septum and the distal end of the passage; and
a longitudinally displaceable sampling probe, disposed in and extending along the passage, the sampling probe extending through and being secured to the diaphragm and being displaceable between a stand-by position and a intake position.

In Example 1, longitudinal displacement of the sampling probe towards the proximal end of the elongate passage causes the filtration section to pass through the septum, the diaphragm stretching to accommodate the displacement of the sampling probe while maintaining a seal about the sampling probe.

### Example 2:

Example 2 is a fluid transfer device which comprises: a body with:
an elongate passage extending through the body and having a proximal end and a distal end;
a longitudinally displaceable sampling probe disposed in and extending along the passage;
a septum sealing the passage at a first location, the septum being pierceable and self-sealing; a diaphragm sealing the passage at a second location intermediate the septum and the distal end of the passage;
the sampling probe extending through and being secured to the diaphragm and having a sharpened end disposed adjacent the septum.

In Example 2, longitudinal displacement of the sampling probe towards the septum causes its sharpened end to pierce and project through the septum, the diaphragm stretching to accommodate the displacement of the sampling probe while maintaining a seal about the sampling probe.

### Example 3:

Example 3 is a fluid transfer device with the same features as Example 1 or Example 2. In Example 3, the portion of the passage between the septum and diaphragm is substantially aseptic.

### Example 4:

Example 4 is a fluid transfer device with the same features as Example 1 or Example 2. Example 4 further comprises a tank mount.

### Example 5:

Example 5 is a fluid transfer device with the same features as Example 4. Example 5 is aseptic including the tank mount.

### Example 6:

Example 6 is a fluid transfer device with the same features as Example 4. The tank mount of Example 6 defines an opening, the sampling probe passing through the opening when displaced.

### Example 7:

Example 7 is a fluid transfer device with the same features as Example 4. Example 7 further comprises a groove located in the tank mount and a seal recessed in the groove for forming a seal between the tank mount and a tank.

### Example 8:

Example 8 is a fluid transfer device with the same features as Example 4. The tank mount of Example 8 further comprises a threaded stud for mounting the fluid transfer device to a tank.

### Example 9:

Example 9 is a fluid transfer device with the same features as Example 1 or Example 2. In Example 9, a proximal end of the sampling probe is disposed in the septum prior to displacement.

### Example 10:

Example 10 is a fluid transfer device with the same features as Example 1 or Example 2. In Example 10, the diaphragm is constructed of a silicone elastomer.

### Example 11:

Example 11 is a fluid transfer device with the same features as Example 1 or Example 2. In Example 11, the septum is constructed of a silicone elastomer.

### Example 12:

Example 12 is a fluid transfer device with the same features as Example 1 or Example 2. In Example 12, the diaphragm is constructed of a solvent resistant elastomer.

### Example 13:

Example 13 is a fluid transfer device with the same features as Example 1 or Example 2. In Example 13, the septum is constructed of a solvent resistant elastomer.

### Example 14:

Example 14 is a fluid transfer device with the same features as Example 12. In Example 14, the diaphragm is constructed of a perfluoropolyether elastomer.

### Example 15:

Example 15 is a fluid transfer device with the same features as Example 1 or Example 13. In Example 15, the septum is constructed of a perfluoropolyether elastomer.

Example 16 is a fluid transfer device with the same features as Example 1 or Example 2. Example 16 further comprises a tab assembly to which the sampling probe is connected, the tab assembly controlling the displacement of the sampling probe through the passage.

### Example 17:

Example 17 is a fluid transfer device with the same features as Example 16. In Example 17, a distal end of the tab assembly further comprises a barb.

### Example 18:

Example 18 is a fluid transfer device with the same features as Example 16. In Example 18, the tab assembly further comprises a tab guide. In Example 18, longitudinal displacement of the tab assembly displaces the tab guide through a portion of the passage.

### Example 19:

Example 19 is a fluid transfer device with the same features as Example 18. Example 19 further comprises a retaining cap at a distal end of the body.

### Example 20:

Example 10 is a fluid transfer device with the same features as Example 19. In Example 20, the retaining cap comprises an opening through which the sampling probe and tab guide pass.

### Example 21:

Example 21 is a fluid transfer device with the same features as Example 20. In Example 21, the retaining cap engages a distal end of the body and further comprises restraining means to allow the tab guide and the sampling probe to move through the retaining cap and stop at a predetermined position.

### Example 22:

Example 22 is a fluid transfer device with the same features as Example 21. In Example 22, the restraining means comprises an axial channel extending along the tab guide and a detent extending from the opening in the retaining cap into the axial channel, whereby the detent limits longitudinal displacement of the tab guide so as to limit a range of movement of the tab guide.

### Example 23:

Example 23 is a fluid transfer device with the same features as Example 1 or Example 2. In Example 23, the sampling probe is axially biased longitudinally to maintain a proximal end of the sampling probe disposed adjacent the septum, and for retracting the sampling probe to a retracted non-actuated position after displacement.

### Example 24:

Example 24 is a fluid transfer device with the same features as Example 23. In Example 24, the sampling probe is axially biased by a spring.

### Example 25:

Example 25 is a fluid transfer device with the same features as Example 1 or Example 2. In Example 25, the body comprises a substantially cylindrical outer portion, at least one alignment aperture, and seats for the diaphragm and septum.

### Example 26:

Example 26 is a fluid transfer device with the same features as Example 1 or Example 2. Example 26 is joined together with additional devices with the same features as Example 1 or Example 2 to form a cartridge having a plurality of bodies.

### Example 27:

Example 27 is a fluid transfer device with the same features as Example 1 or Example 2. Example 27 further comprises a safety retention band for preventing the sampling probe from longitudinal displacement.

### Example 28:

Example 28 is a fluid transfer device with the same features as Example 1 or Example 2. Example 28 further comprises a luer connected to a distal end of the sampling probe.

### Example 29:

Example 29 is a fluid transfer device. Example 29 comprises a plurality of bodies joined together, each body comprising:
an elongate passage extending through the body and having a proximal end and a distal end;
a longitudinally displaceable sampling probe disposed in and extending along the passage; a septum sealing the passage at a first location, the septum being pierceable and self-sealing;
a diaphragm sealing the passage at a second location intermediate the septum and the distal end of the passage;
the sampling probe extending through and being secured to the diaphragm and having a sharpened end disposed adjacent the septum.

In Example 29, longitudinal displacement of the sampling probe towards the septum causes its sharpened end to pierce and project through the septum, the diaphragm stretching to accommodate the displacement of the sampling probe while maintaining a seal about the sampling probe.

### Example 30:

Example 30 is a kit for transferring fluid comprising a fluid transfer device comprising: one or more bodies joined together, each body comprising:
an elongate passage extending through the body, each having a proximal end and a distal end;
a longitudinally displaceable sampling probe disposed in and extending along the passage;
a septum sealing the passage at a first location, the septum being pierceable and self-sealing;
a diaphragm sealing the passage at a second location intermediate the septum and the distal end of each passage; the sampling probe extending through and being secured to the diaphragm and having a sharpened end disposed adjacent the septum.

Example 30 further comprises a tank mount, one or more lengths of flexible tubing, and a plurality of sample containers. In Example 30, longitudinal displacement of the sampling probe toward the septum causes its sharpened end to pierce and project through the septum, the diaphragm stretching to accommodate the displacement of a sampling probe while maintaining its seal about the sampling probe.

### Example 31:

Example 31 is a kit with the same features as Example 30. In Example 31, the fluid transfer device, tank mount, one or more lengths of flexible tubing, and plurality of sample containers are substantially aseptic.

## Claims

1. A sampling probe (81) comprising a hollow shaft (811) with a proximal end (812) and a distal end (813); wherein the shaft comprises a filtration section for filtered intake of sample.

2. The sampling probe of claim 1, wherein the shaft has a longitudinal axis and the filtration section angularly extends around the longitudinal axis of the shaft.

3. The sampling probe of claim 1 or claim 2, wherein the filtration section is made of a filtration membrane.

4. The sampling probe of any one of claims 1 to 3, further comprising a fluid connector for fluidly connecting the filtration section with a tubing.

5. The sampling probe of any one of claims 1 to 4, wherein the shaft further has an opening (815) for unfiltered intake of sample, preferably adjacent to the filtration section.

6. The sampling probe of claim 5, wherein the shaft comprises two separate fluid paths: a first fluid path in fluid communication with the filtration section and a second fluid path in fluid communication with the opening.

7. The sampling probe of claim 5 or claim 6, comprising a further fluid connector for fluidly connecting the opening with a further tubing.

8. The sampling probe of any one of claim 1 to 7, wherein the proximal end of the shaft is pointed.

9. A fluid transfer device (11) comprising:
a body (83, 151) with:
an elongate passage extending through the body and having a proximal end and a distal end;
a septum (59) sealing the passage at a first location, the septum being self-sealing;
a diaphragm (29, 43) sealing the passage at a second location intermediate the septum and the distal end of the passage; and
the longitudinally displaceable sampling probe (81) of any one of claims 1 to 9, disposed in and extending along the passage, the sampling probe extending through and being secured to the diaphragm and being displaceable between a stand-by position and a intake position;
wherein longitudinal displacement of the sampling probe towards the proximal end of the elongate passage causes the filtration section (814) to pass through the septum, the diaphragm stretching to accommodate the displacement of the sampling probe (81) while maintaining a seal about the sampling probe.

10. A fluid transfer device (11) comprising:
a body (83, 151) with:
an elongate passage extending through the body and having a proximal opened end and a distal end;
a plug (59') attached to the proximal opened end of the shaft and sealing the passage at a first location;
a diaphragm (29, 43) sealing the passage at a second location intermediate the plug (59') and the distal end of the passage; and
the longitudinally displaceable sampling probe (81) of any one of claims 1 to 9, disposed in and extending along the passage, the sampling probe extending through and being secured to the diaphragm and being displaceable between a stand-by position and a intake position;
wherein longitudinal displacement of the sampling probe towards the proximal end of the elongate passage causes the plug (59') to be displaced away from the opened end, with the filtration section (814) passing through the proximal opened end and/or being close to the proximal opened end to allow filtration of fluid circulating from a fluid transfer opening delimited by the proximal opened end to interior of the hollow shaft (811), the diaphragm stretching to accommodate the displacement of the sampling probe (81) while maintaining a seal about the sampling probe.

11. The fluid transfer device of claim 9 or 10, further comprising a tab assembly to which the sampling probe is connected, the tab assembly controlling the displacement of the sampling probe through the passage.

12. The fluid transfer device of any one of claims 9 to11, further comprising a spring biasing the sampling probe towards its stand-by position.

13. The fluid transfer device of any one of claims 9 to 12, further comprising a tank mount.

14. A fluid transfer cartridge comprising a plurality of fluid transfer devices as described in any one of claims 9 to 12 joined together.

15. The fluid transfer cartridge of claim 14, further comprising a tank mount.

16. A kit for transferring liquid comprising:
the fluid transfer device of claim 13 or the fluid transfer cartridge of claim 15;
one or more lengths of flexible tubing; and
a plurality of sample containers.
